# EUROPÄISCHE PATENTANMELDUNG

(11) **EP 3 136 321 A1**
(43) Veröffentlichungstag der Anmeldung: **01.03.2017**
(21) Anmeldenummer: 16185096.1
(22) Anmeldetag: 22.08.2016
(51) Int. Cl.: G06Q 10/08

(54) **VERFAHREN ZUM TRANSPORT VON GEGENSTÄNDEN VON EINEM VERSENDER ZU EINEM EMPFÄNGER MITTELS EINEM KURIER**

(30) Priorität: 28.08.2015 DE 102015114305
(71) Anmelder: Deutsche Telekom AG, 53113 Bonn (DE)
(72) Erfinder: Turkowski, Sascha, 16548 Glienicke/Nordbahn (DE); Schüler, André, 13349 Berlin (DE); Benthin, Carina, 14513 Teltow (DE); Meye, Paul, 16341 Panketal (DE); Giwerzew, Dimitri, 10719 Berlin (DE); Huremovic, Samir, 13409 Berlin (DE)
(74) Vertreter: Braun-Dullaeus Pannen Patent- und Rechtsanwälte

(57) **Zusammenfassung**

Verfahren zum Transport von Gegenständen von einem Versender (11) zu einem Empfänger (31) mittels einem Kurier (21),
wobei der Versender (11), der Empfänger (31) und der Kurier (21) mit einem mobilen Endgerät, insbesondere einem Mobiltelefon oder Tablet PC, nämlich dem Versenderendgerät (12), dem Empfängerendgerät (32) bzw. dem Kurierendgerät (22), ausgestattet sind, welche jeweils über eine Standortermittlungsfunktion zur Ermittlung des eigenen Standortes, nämlich des Versenderstandortes (13), des Empfängerstandortes (33) bzw. des Kurierstandortes (23), verfügen,
wobei der Versender (11), der Empfänger (31) und der Kurier (21) jeweils anhand einer Identifizierungsangabe auf dem jeweiligen Endgerät angemeldet sind, nämlich anhand der VersenderlD (11), der EmpfängerlD (31) bzw. der KurierlD (32),
umfassend die folgenden Verfahrensschritte:
Eingeben einer EmpfängerlD (31) auf dem Versenderendgerät (12),
Ermitteln des Versenderstandortes (13) und des Empfängerstandortes (33) über die jeweilige Funktion zur Ermittlung des eigenen Standortes,
Generieren einer Transportanfrage umfassend Angaben über den Versenderstandort (13) und den Empfängerstandort (33),
Übermittlung der Transportanfrage an das Kurierendgerät (22) und Bestätigen der Transportanfrage am Kurierendgerät (21),
Ermitteln zumindest einer ersten Route (151, 151) zu einem Übernahmetreffpunkt (42) zum Zusammenführen von Versender (11) und Kurier (21) und anschließend Übernahme des Gegenstandes (14) durch den Kurier (21) vom Versender (11) an einem Übernahmetreffpunkt (42),
Ermitteln zumindest einer zweiten Route (252, 253) zu einem Übergabetreffpunkt (43) zum Zusammenführen von Kurier (21) und Empfänger (31) und anschließend Übergabe des Gegenstandes (14) von dem Kurier (21) an den Empfänger (31) an einem Übergabetreffpunkt (42).

## Beschreibung

Die Erfindung betrifft ein Verfahren zum Transport von Gegenständen von einem Versender zu einem Empfänger mittels einem Kurier.

In Deutschland gibt es über 50 Millionen Kraftfahrzeuge, die täglich über 3 Milliarden Kilometer zum großen Teil mit leerer Ladefläche auf deutschen Straßen zurücklegen. Dabei verbleibt eine enorme Menge an Transportkapazität ungenutzt, wodurch eine hohe Umweltbelastung bedingt wird und die Klimaziele gefährdet werden. Um einen Gegenstand von einem Versender zu einem Empfänger zu bringen, sind teilweise komplizierte Beauftragungen von Logistikdienstleistern erforderlich. Diese weisen in der Regel keine zeitgemäße Transparenz während des Versandprozesses auf und zeigen sich insbesondere durch zu geringe Flexibilität in der Auslieferung bei Nichterreichbarkeit des Empfängers aus.

Es haben sich bereits Portale im Internet gebildet mit dem Ziel, eine Art Mitfahrgelegenheit für Gegenstände anzubieten, beispielsweise unter www.raumobil.de zu finden. In diesem Portal gibt ein Versender den ungefähren Standort des Gegenstands und den Standort des Empfängers ein. Ein Kurier, der über freie Ladekapazität in seinem Fahrzeug verfügt, kann eine angestrebte Transportroute eingeben. Das System ermittelt so geeignete Kuriere für den Transport des Gegenstandes.

Solche Systeme sind aber noch recht kompliziert, da die Abstimmung, wann der Gegenstand vom Kurier übernommen werden soll und wann der Gegenstand an den Empfänger übergeben werden soll, häufig über Telefongespräche erfolgt und kaum automatisiert ist.

Es ist Aufgabe der vorliegenden Erfindung, die bekannten Mitfahrgelegenheiten für Gegenstände komfortabler zu gestalten. Die der Erfindung zugrunde liegende Aufgabe wird gelöst durch ein Verfahren nach Anspruch 1; bevorzugte Ausgestaltungen ergeben sich aus den Unteransprüchen und der nachfolgenden Beschreibung.

Der Kern der Erfindung liegt nun insbesondere darin, dass anstelle von statischen Versender- und Empfängeradressen der dynamische Versenderstandort beziehungsweise der dynamische Empfängerstandort zugrunde gelegt wird, der durch die Endgeräte des Versenders und des Empfängers automatisch ermittelt wird. Insofern wird im Rahmen der vorliegenden Erfindng nicht ein Auftrag erteilt, einen Gegenstand von einer Adresse A zu einer Adresse B zu versenden. Vielmehr wird eine Transportgelegenheit geschaffen, einen Gegenstand vom Standort des Versenderendgeräts zum Standort des Empfängerendgeräts zu transportieren. Die Hausanschrift des Versenders und Empfängers sind dabei zunächst unrelevant.

Anhand der tatsächlichen Standorte wird nun die Route berechnet und mit möglichen Routen von geeigneten Kurieren verglichen. Ein Kurier kann somit einen Transportauftrag annehmen beziehungsweise sich für einen solchen bewerben, wenn die Route, die er sowieso fährt, einigermaßen auf einer möglichen Route liegt, die zu fahren ist, um vom Standort des Versenderendgeräts zum Standort des Empfängerendgeräts zu gelangen.

Vorzugsweise wird dabei im Vorfeld der Bestätigung der Transportanfrage am Kurierendgerät der Versenderstandort und der Empfängerstandort mit einer im Kurierendgerät hinterlegten Fahrtroute abgeglichen. Basierend auf diesen Abgleich wird die Transportanfrage auf dem Kurierendgerät zur Bestätigung angeboten.

Bevorzugt wird dabei der ermittelte Versenderstandort als Übernahmetreffpunkt festgelegt. Entsprechend kann der ermittelte Empfängerstandort als Übergabetreffpunkt festgelegt werden. Als Übernahmetreffpunkt wird dabei der Treffpunkt von Versender und Kurier definiert, an dem der Kurier den Gegenstand vom Versender übernimmt; als Übergabetreffpunkt wird dabei der Treffpunkt von Kurier und Empfänger definiert, an dem der Kurier den Gegenstand an den Empfänger übergibt. Basierend auf diesen initial ermittelten Treffpunkten kann somit eine erste Auswahl von geeigneten Kurieren erfolgen. Der Übernahmetreffpunkt oder der Übergabetreffpunkt kann in einer alternativen Ausgestaltung auch durch eine Nutzereingabe festgelegt werden. Der Nutzer (Versender oder Empfänger) kann dabei seinen momentanen Standort überschreiben und bestätigen, dass er an einem möglichen Zeitpunkt eines Treffens unter einer frei eingebbaren Anschrift anzutreffen ist.

Vorzugsweise wird im Vorfeld der Übernahme der Versenderstandort und der Kurierstandort überwacht. In Abhängigkeit von Änderungen des Versenderstandortes und des Kurierstandortes kann zumindest eine neue erste Route zu einem geänderten Übernahmetreffpunkt ermittelt werden. Entsprechendes gilt, dass im Vorfeld der Übergabe der Kurierstandort und der Empfängerstandort überwacht werden kann. In Abhängigkeit von Änderungen des Kurierstandorts und des Empfängerstandorts kann zumindest eine zweite neue Route zu einem geänderten Übergabetreffpunkt ermittelt werden. So können folglich die jeweiligen Treffpunkte aller möglichen aktuellen Standorte der jeweils zu treffenden Beteiligten angepasst werden. Sollte sich hieraus eine mögliche Fahrtzeitreduzierung ergeben, so können die Treffpunkte vom System neu vorgeschlagen werden. Werden die neu vorgeschlagenen Treffpunkte durch die beiden Beteiligten bestätigt, so wird der neu vorgeschlagene Treffpunkt als Übernahmetreffpunkt bzw. Übergabetreffpunkt festgelegt.

Zur Dokumentation der erfolgten Übergabe oder Übernahme kann während der Übernahme beziehungsweise Übergabe eine Fotografie des Gegenstands mit dem Kurier beziehungsweise mit dem Empfänger aufgenommen werden. Eine solche Fotografie kann über eine Internetverbindung zu Dokumentationszwecken auf dem Server hinterlegt werden. Der Vorteil der Fotographie liegt darin, dass im Wesentlichen keine besondere technische Einrichtung am Gegenstand vorzusehen ist. Bei herkömmlichen Paketzustellern ist als solche technische Einrichtung beispielsweise ein QR- oder RFID-Code angebracht, was allerdings besondere technische Gerätschaften zur Erzeugung oder Anbringung auf den Gegenstand beim Versender erfordert. Die Verwendung der Fotographie zu Nachweisezwecken erfordert dies nicht, da übliche Endgeräte mit Kameras ausgestattet sind.

In einer bevorzugten Ausgestaltung werden die Standorte der beteiligten Endgeräte ständig überwacht und auf den entsprechenden anderen Endgeräten angezeigt. Insbesondere von Bedeutung ist der Standort des Kurierendgeräts nach der Übernahme. Von Bedeutung ist ebenfalls der Standort des Empfängers vor der Übergabe. Ferner interessant ist der Standort des Versenders vor der Übernahme.

Die Erfindung wird anhand der Figuren nachfolgend näher erläutert, hierin zeigt
- Figur 1: schematisch das erfindungsgemäße Verfahren im Zusammenhang mit der Übernahme des Gegenstands durch den Kurier vom Versender;
- Figur 2: schematisch das erfindungsgemäße Verfahren im Zusammenhang mit der Übergabe des Gegenstands vom Kurier zum Empfänger;
- Figur 3: ein Ablaufdiagramm des erfindungsgemäßen Verfahrens.

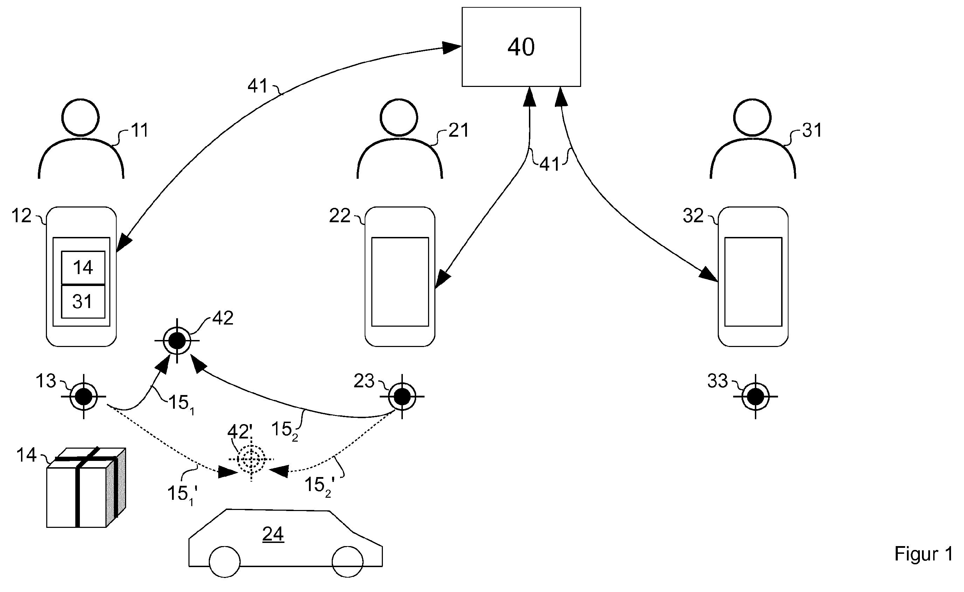

Figur 1 zeigt einen Versender 11, welche eine natürliche Person darstellt, die über ein Versenderendgerät, nämlich ein Mobiltelefon 12 verfügt. Das Mobiltelefon 12 verfügt über eine Funktionalität, mittels der das Mobiltelefon dessen eigenen Standort 13 ermitteln kann, beispielsweise über GPS. Der Versender 11 möchte einen Gegenstand 14 zu einem Empfänger 31, ebenfalls einer natürlichen Person versenden, und möchte sich hierbei einem Kurier 21 bedienen, der über ein Fahrzeug 24 verfügt und den Transport des Gegenstandes durchführen kann. Der Empfänger 31 verfügt auch über ein Empfängerendgerät, nämlich ein Mobiltelefon 32, welches ebenfalls eingerichtet ist, dessen eigenen Standort, nämlich den Empfängerstandort 33 zu ermitteln. Gleichfalls verfügt auch der Kurier 21 über ein Kurierendgerät, nämlich ein Mobiltelefon 22, welches ebenfalls über die Funktion zur Ermittlung des eigenen Standorts, nämlich des Kurierstandorts 23 verfügt.

Sämtliche der Endgeräte 12, 22, 32 sind über eine Datenverbindung, beispielsweise eine Internetverbindung 41, mit einem zentralen Server 40 verbunden, welcher die Vorgänge während des erfindungsgemäßen Verfahrens überwacht und gegebenenfalls steuernd eingreift.

Zu Beginn liegt der Gegenstand am Versenderstandort 13 vor. Der Versender 11 tippt nun auf seinem Endgerät 12 beispielsweise die Telefonnummer des Empfängers 31 als EmpfängerID ein und trägt den Gegenstand 14 in ein entsprechendes Feld ein. Hierdurch wird dem System mitteilt, dass der Gegenstand 14 an den Empfänger 31 versendet werden soll. Über eine Datenverbindung 41 wird diese Anfrage an den Server 40 übermittelt. Der Server 40 teilt zum einen dem Empfänger 31 mit, dass eine Transportanfrage zur Übermittlung eines Gegenstandes 14 an ihn gestellt wurde; zugleich stellt der Server 40 möglichen Kurieren 21 die Transportanfrage zur Verfügung. Ein Kurier, der den Transportauftrag annehmen möchte, kann durch Bestätigung am Kurierendgerät 22 den Auftrag annehmen beziehungsweise sich für den Auftrag bewerben. Die endgültige Entscheidung, ob der Versender über den Kurier 22 den Auftrag abwickeln möchte, trifft anschließend der Versender 11.

Anhand der Funktionalitäten zur Ermittlung des eigenen Standortes sind die derzeitigen Standorte 13, 23, 33 des Versenders 11, des Kuriers 21 und des Empfängers 31 bekannt. Zugleich bekannt ist auch eine mögliche Fahrtroute, die der Kurier 21 bereits in seinem Kurierendgerät 22 hinterlegt hat. Basierend auf den bekannten Standorten und der möglichen Fahrtroute wird nun vom System ein Übernahmetreffpunkt 42 vorgeschlagen, an dem die Übernahme des Gegenstandes durch den Kurier vom Versender erfolgt. Sowohl der Versender 11 als auch der Kurier 21 bestätigen diesen Übernahmetreffpunkt 42 über entsprechende Eingaben an ihrem jeweiligen Endgerät. Es wird zumindest nun eine erste Route 15₁, 15₂ ermittelt, die den Versender 11 beziehungsweise den Kurier 21 zum Übernahmetreffpunkt 42 führt. Üblicherweise wird der Kurier 21 über eine Route 15₂ in Richtung zum Versender 11 geführt. Dabei kann der Treffpunkt 42 der aktuelle Standort 13 des Versenders 11 sein. Eine weitere erste Route kann aber auch den Versender 11 zu einem abweichenden Treffpunkt 42 führen, sodass sich im Wesentlichen beide, der Versender 11 sowie der Kurier 21, auf den Weg zum Treffpunkt 42 machen.

Im Vorfeld der Übernahme werden die aktuellen Positionen 13, 23 überwacht. Sollte sich ergeben, dass der Versender 11 eine andere Route einschlägt, die ihn näher an den Kurier heranführt, so kann das System einen geänderten Übernahmetreffpunkt 42' errechnen, und dem Versender 11 sowie dem Kurier 21 zur Bestätigung auf dem jeweiligen Endgerät 12, 22 anbieten. Akzeptieren der Versender 11 und der Kurier 21 diesen geänderten Übernahmetreffpunkt 42', so werden neue erste Routen 15₁' und 15₂' berechnet und auf den jeweiligen Endgeräten 12, 22 angezeigt.

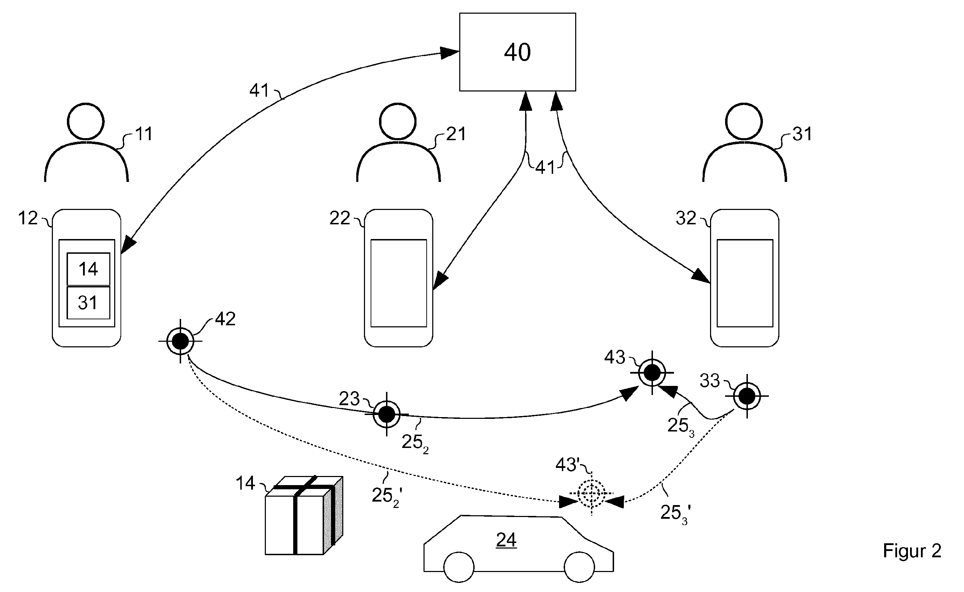

Figur 2 zeigt die wesentlichen Elemente des Verfahrens nach der Übernahme des Gegenstands 14 durch den Kurier 21. Basierend auf aktuellen Routen, Informationen und den Standorten 23, 33 von Kurier 21 und Empfänger 31 wird vom System ein Übergabetreffpunkt 43 vorgeschlagen und dem Kurier 21 und dem Empfänger 31 auf den jeweiligen Endgeräten 22, 32 angeboten. Bestätigen beide denselben Übergabetreffpunkt 43, so ist dieser vereinbart. Es erfolgt eine Berechnung einer zweiten Route 25₂ beziehungsweise 25₃, anhand derer der Kurier 21 sowie der Empfänger 31 zum vereinbarten Treffpunkt 43 gelangen. Auch hier ist es wieder möglich, dass durch Beobachtung der aktuellen Standorte 23, 33 ein alternativer, besser geeigneter, geänderter Übergabetreffpunkt 43' ermittelt werden kann, der den beiden Teilnehmern, Kurier 21 und Empfänger 31, vorgeschlagen werden kann. Bestätigen die beiden diesen geänderten Übergabetreffpunkt 43' so werden geänderte zweiten Routen 25₂' und 25₃' berechnet und auf den jeweiligen Endgeräten 22, 32 angezeigt.

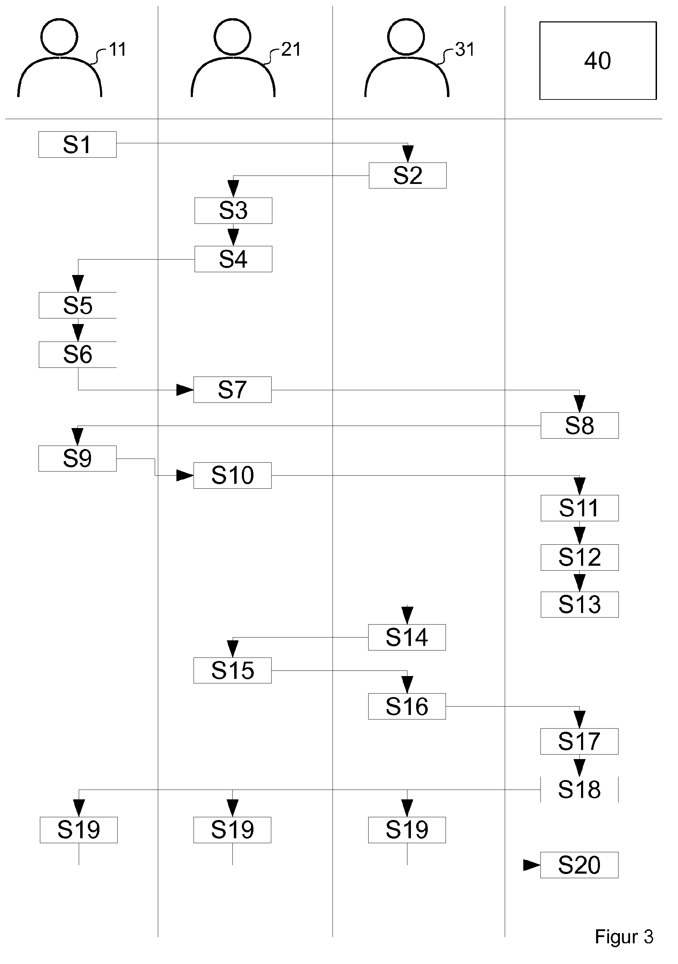

Figur 3 zeigt ein Ablaufdiagramm mit weiteren Einzelheiten des erfindungsgemäßen Verfahrens.

Im Schritt S1 wird auf dem Endgerät 21 des Senders eine Anfrage erstellt. Diese Anfrage enthält den aktuellen Standort 31 des Versenders 11 und die Angabe der EmpfängerID 31 des Empfängers. Anhand der EmpfängerID 31 kann durch das Empfängerendgerät der aktuelle Standort des Empfängers 31 ermittelt werden. Ferner werden Eingaben hinsichtlich der Art und Größe des zu versendenden Gegenstands eingegeben. Der Empfänger 31 bestätigt im Schritt S2 seinen aktuellen Standort als Lieferadresse oder gibt eine alternative Lieferadresse ein, der bereits als Vorschlag für einen Übergabetreffpunkt dienen kann. Hierbei ist es nicht erforderlich, dass dieser Übergabetreffpunkt endgültig ist. Wie bereits erwähnt, kann der Übergabetreffpunkt noch angepasst werden.

Im Schritt S3 werden einem oder mehreren möglichen Kurieren 21 eine Liste von aktuellen Transportanfragen auf deren Endgerät 22 angeboten. Der Kurier erhält die Möglichkeit, in die Eingabemaske mögliche Fahrziele, die in der Zukunft liegen, einzugeben und so mögliche geeignete Transportanfragen auszuwählen. Hat er eine für ihn geeignete Transportanfrage ausgewählt, so bewirbt er sich im Schritt S4 auf die Transportanfrage. Diese Bewerbung wird nun an den Versender 11 übermittelt, der im Schritt S5 eine Mehrzahl von sich bewerbenden Kurieren 21 aufruft, und sich für einen Kurier entscheidet. Im Schritt S6 erteilt der Versender 11 einem ausgewählten Kurier 21 den Auftrag. Im Schritt S7 bestätigt der ausgewählte Kurier 21 den Auftrag. Der Server 40 gibt nun die Standorte aller Beteiligten, nämlich des Versenders 11, des Kuriers 21 und dem Versender 31 frei, so dass die Beteiligten die Standorte der jeweiligen anderen Beteiligten auf ihren Endgeräten abrufen können.

Im Schritt S9 befindet sich Kurier und Versender am Übernahmetreffpunkt und der Kurier übernimmt den Gegenstand vom Versender 11; der Kurier bestätigt im Schritt S10 die Übernahme der Sendung. Hierbei kann eine Fotografie angefertigt werden von Kurier 21 und Gegenstand 14, welche an den Server 40 per Internet übermittelt wird. Anstelle der Fotographie kann die Übergabe auch dadurch dokumentiert werden, dass mit dem Kurierendgerät ein auf dem Gegenstand angebrachter QR-Code, Strichcode, NFC-Code oder RFID-Code eingescannt wird und eine entsprechende Nachricht an den Server übertragen wird. Daraufhin veranlasst der Server 40 den Bankeinzug, um die Transportgebühren vom Versender 11 einzuziehen. Da der Gegenstand nun in der Obhut des Kuriers 21 ist, ist der Standort 13 des Versenders 11 nicht mehr von Relevanz; im Schritt S12 wird nun die Sichtbarkeit des Versenderstandortes 13 ausgeschaltet.

Im Schritt S13 überwacht nun der Server 40 die Lieferung, indem er die Übereinstimmung der Standortänderung des Kuriers 21 mit der vorgegebenen Route abgleicht. Im Schritt S14 wird der Empfängerstandort 33 überwacht. Sollte sich der Standort 33 des Empfängers 31 signifikant vom vereinbarten Übergabetreffpunkt 43 entfernen, so kann ein abweichender Übergabetreffpunkt 43' vorgeschlagen werden und dem Empfänger 31 sowie dem Kurier 21 zur Bestätigung angeboten werden. Dies bietet sich insbesondere an, wenn sich ergibt, dass der Empfänger 31 dem Kurier 21 entgegen fährt und durch einen neuen Übergabetreffpunkt die Fahrtroute des Kuriers deutlich reduziert werden kann. Im Schritt S15 treffen sich Kurier und Empfänger am Übergabetreffpunkt. Der Kurier 21 übergibt den Gegenstand 14 an den Empfänger 31. Dieser bestätigt den Empfang im Schritt S16. Hierbei kann wiederum eine Fotografie des Gegenstands 14 mit dem Empfänger 31 zu Nachweiszwecken, insbesondere vom Kurier 21 angefertigt werden und über die Internetverbindung 41 an den Server 40 übermittelt werden. Auch hier kann anstelle der Fotographie die Übergabe dadurch dokumentiert werden, dass mit dem Empfängerendgerät ein auf dem Gegenstand angebrachter QR-Code, Strichcode, NFC-Code oder RFID-Code eingescannt wird und eine entsprechende Nachricht an den Server 40 übertragen wird. Im Schritt S17 veranlasst der Server 40 die Auszahlung an den Kurier 21. Im Schritt S18 werden die Sichtbarkeiten der Standorte vollständig ausgeschaltet.

Im Schritt S19 haben alle Beteiligten die Möglichkeit, für die jeweils anderen Beteiligten Bewertungen abzugeben. Im Schritt S20 werden die Vorgangsdaten oder zumindest Teile davon, insbesondere die Fotografien nach einer Aufbewahrungsfrist von in etwa 90 Tagen gelöscht, sofern keine Einwände von einem der Beteiligten erhoben wurden.

### Bezugszeichenliste

- 11: Versender / VersenderID
- 12: Versenderendgerät
- 13: Versenderstandort
- 14: Gegenstand
- 15: erste Route

- 21: Kurier / KurierID
- 22: Kurierendgerät
- 23: Kurierstandort
- 24: Fahrzeug
- 25: zweite Route

- 31: Empfänger/ EmpfängerID
- 32: Empfängerendgerät
- 33: Empfängerstandort

- 40: Server
- 41: Datenverbindung
- 42: Übernahmetreffpunkt
- 43: Übergabetreffpunkt

## Patentansprüche

1. Verfahren zum Transport von Gegenständen von einem Versender (11) zu einem Empfänger (31) mittels einem Kurier (21),
wobei der Versender (11), der Empfänger (31) und der Kurier (21) mit einem mobilen Endgerät, insbesondere einem Mobiltelefon oder Tablet PC, nämlich dem Versenderendgerät (12), dem Empfängerendgerät (32) bzw. dem Kurierendgerät (22), ausgestattet sind, welche jeweils über eine Standortermittlungsfunktion zur Ermittlung des eigenen Standortes, nämlich des Versenderstandortes (13), des Empfängerstandortes (33) bzw. des Kurierstandortes (23), verfügen,
wobei der Versender (11), der Empfänger (31) und der Kurier (21) jeweils anhand einer Identifizierungsangabe auf dem jeweiligen Endgerät angemeldet sind, nämlich anhand der VersenderID (11), der EmpfängerID (31) bzw. der KurierID (32),
umfassend die folgenden Verfahrensschritte:
Eingeben einer EmpfängerID (31) auf dem Versenderendgerät (12),
Ermitteln des Versenderstandortes (13) und des Empfängerstandortes (33) über die jeweilige Funktion zur Ermittlung des eigenen Standortes,
Generieren einer Transportanfrage umfassend Angaben über den Versenderstandort (13) und den Empfängerstandort (33),
Übermittlung der Transportanfrage an das Kurierendgerät (22) und Bestätigen der Transportanfrage am Kurierendgerät (21),
Ermitteln zumindest einer ersten Route (15₁, 15₁) zu einem Übernahmetreffpunkt (42) zum Zusammenführen von Versender (11) und Kurier (21) und anschließend Übernahme des Gegenstandes (14) durch den Kurier (21) vom Versender (11) an einem Übernahmetreffpunkt (42),
Ermitteln zumindest einer zweiten Route (25₂, 25₃) zu einem Übergabetreffpunkt (43) zum Zusammenführen von Kurier (21) und Empfänger (31) und anschließend Übergabe des Gegenstandes (14) von dem Kurier (21) an den Empfänger (31) an einem Übergabetreffpunkt (42).

2. Verfahren nach dem vorherigen Anspruch,
**dadurch gekennzeichnet,**
**dass** im Vorfeld der Bestätigung der Transportanfrage am Kurierendgerät (21) der Versenderstandort (13) und der Empfängerstandort (33) mit einer im Kurierendgerät (22) hinterlegten Fahrtroute abgeglichen wird und basierend auf diesem Abgleich die Transportanfrage auf dem Kurierendgerät (22) zur Bestätigung angeboten wird.

3. Verfahren nach einem der vorherigen Ansprüche,
**dadurch gekennzeichnet,**
**dass** der ermittelte Versenderstandort (13) als Übernahmetreffpunkt (42) festgelegt wird und/oder dass der ermittelte Empfängerstandort (33) als Übergabetreffpunkt (43) festgelegt wird.

4. Verfahren nach einem der vorherigen Ansprüche,
**dadurch gekennzeichnet,**
**dass** der Übernahmetreffpunkt (42) und/oder der Übergabetreffpunkt (43) durch eine Nutzereingabe festgelegt oder verändert wird.

5. Verfahren nach einem der vorherigen Ansprüche,
**dadurch gekennzeichnet,**
**dass** im Vorfeld der Übernahme der Versenderstandort (13) und der Kurierstandort (23) überwacht werden und in Abhängigkeit von Änderungen des Versenderstandortes (13') und des Kurierstandorts (23') zumindest eine neue erste Route (15₁', 15₂") zu einem geänderten Übernahmetreffpunkt (42') ermittelt wird,
und/oder
**dass** im Vorfeld der Übergabe der Kurierstandort (23) und der Empfängerstandort (33) überwacht werden und in Abhängigkeit von Änderungen des Kurierstandorts (23) und des Empfängerstandortes zumindest eine neue zweite Route (25₁', 25₂") zu einem geänderten Übergabetreffpunkt (43') ermittelt wird.

6. Verfahren nach dem vorherigen Anspruch,
**dadurch gekennzeichnet,**
**dass** ein geänderter Übernahmetreffpunkt (42') auf dem Versenderendgerät (12) und dem Kurierendgerät (22) zur Bestätigung angeboten wird bzw. ein geänderter Übergabetreffpunkt (43') auf dem Kurierendgerät (22) und dem Empfängerendgerät (31) zur Bestätigung angeboten wird.

7. Verfahren nach einem der vorherigen Ansprüche,
**dadurch gekennzeichnet,**
**dass** während der Übernahme eine Fotographie des Gegenstandes (14) mit dem Kurier (21) mit einem der Endgeräte (12, 22) aufgenommen wird und/oder dass während der Übergabe eine Fotographie des Gegenstandes (14) mit dem Empfänger (21) mit einem der Endgeräte (22, 32) aufgenommen wird.

8. Verfahren nach einem der vorherigen Ansprüche,
**dadurch gekennzeichnet,**
**dass** der Standort des Gegenstandes (14) auf dem Versenderendgerät (12) und/oder dem Empfängerendgerät (32) angezeigt wird.
